# EUROPEAN PATENT SPECIFICATION

(11) **EP 2 686 388 B1**
(45) Date of publication and mention of the grant of the patent: **01.03.2017**
(21) Application number: 12707790.7
(22) Date of filing: 12.03.2012
(51) Int. Cl.: C09C 1/30, C01B 33/148, B01F 17/00, B82Y 30/00, C01B 33/159, C01B 33/18, D21H 17/13, C08L 95/00, D21H 21/16, B01F 17/54, A23L 29/294

(54) **MODIFIED SILICA PARTICLES**
MODIFIZIERTE SILICA-TEILCHEN
PARTICULES DE SILICE MODIFIÉE

(30) Priority: 14.03.2011 EP 11158141; 14.03.2011 US 201161452354 P
(43) Date of publication of application: 22.01.2014
(73) Proprietor: Akzo Nobel Chemicals International B.V., 6824 BM Arnhem (NL)
(72) Inventor: TÖRNCRONA, Anders, S-445 34 Bohus (SE); HOLMBERG, Krister, S-413 10 Göteborg (SE); BORDES, Romain, S-416 48 Göteborg (SE)
(74) Representative: Akzo Nobel IP Department
(86) International application number: PCT/EP2012/054189
(87) International publication number: WO 2012/123386

(56) References cited:
- US-A- 4 151 154
- US-A1- 2005 186 331
- US-A1- 2009 092 923
- US-A1- 2010 105 817

## Description

The present invention relates to modified colloidal silica particles, an aqueous dispersion and composition thereof, a method of producing such silica particles, and uses thereof.

### Background of the invention

Emulsifiers and dispersants are well known in the art. Conventional emulsifiers, such as surfactants, have an amphiphilic molecular structure and stabilise an emulsion by positioning themselves at the phase interface, thereby acting to prevent droplet coalescence. It is also possible to stabilize an emulsion by particle-stabilized emulsions, known as Pickering or Ramsden emulsions. They are very stable due to the adsorption of particles (which are usually not amphiphilic) at the interface between the continuous and dispersed phases, providing a barrier to prevent droplet coalescence and phase separation.

WO 04/035474 discloses a method of producing an aqueous dispersion comprising mixing at least one silane compound and colloidal silica particles to form silanized colloidal silica particles, and mixing the silanized colloidal silica particles with an organic binder to form a stable aqueous dispersion.

US 2009/092923 discloses modified silica particles, the surface of which is modified by an organic compound having at least one ethylenically unsaturated group, at least one hydrophilic moiety and at least one silyloxy group, which are incorporated in into a photosensitive layer of a photosensitive lithographic printing plate.

It would be desirable to provide surface modified silica particles exhibiting surface activity for inter alia use in stable, efficient and environmentally friendly dispersions as emulsifiers and dispersants. It would also be desirable to provide an industrially applicable method of producing such modified silica particles. An object of the present invention is to provide such surface modified silica particles and a dispersion thereof which minimise the environmental impact without reducing the surface activity or emulsifying effect of the particles and the dispersion.

### Brief description of the invention

According to one aspect, the invention relates to a modified colloidal silica particle covalently linked to at least one polyalkyleneoxy moiety having at least about 3 alkyleneoxy units, wherein said polyalkyleneoxy moiety is terminated by an alkyl group.

According to another aspect, the invention relates to a method of producing a modified colloidal silica particle comprising reacting at least one first polyalkyleneoxy compound having at least about 3 alkyleneoxy units with a colloidal silica particle to form a covalent link between the at least one first polyalkyleneoxy compound and the silica particle, wherein said polyalkyleneoxy moiety is terminated by an alkyl group.

According to a further aspect, the invention relates to an aqueous dispersion and a composition comprising the modified colloidal silica particles of the invention.

According to a further aspect, the invention relates to the use of modified colloidal silica particles and aqueous dispersion comprising modified colloidal silica particles according to the invention as an emulsifier.

These and further aspects of the invention will be described in more detail in the detailed description below.

### Brief description of the figures

Figure 1 illustrates emulsions of paraffin oil after 1-2 weeks by using the modified silica sols according to examples 7, 8, 9 and 10.
Figure 2 illustrates microscope images of the emulsions in figure 1 diluted in water. Top left is the silica sol according to example 7, top right is the silica sol according to example 8, bottom left the silica sol according to example 9 and bottom right is the silica sol according to example 10.
Figure 3 illustrates emulsion droplets observed in a light microscope for bitumen emulsions made by use of the modified silica sol according to example 6.
Figure 4 illustrates emulsion droplets observed in a light microscope for fuel oil emulsions made by use of the modified silica sol according to example 6.

### Detailed description of the invention

According to a first aspect of the invention, the modified colloidal silica particle of the invention contains a silica particle which is in the colloidal range of particle size; it may have an average particle diameter ranging from about 2 to about 150 nm, preferably from about 3 to about 50 nm, and most preferably from about 5 to about 40 nm. As conventional in silica chemistry, the particle size refers to the average size of the primary particles. The silica particle may contain other elements such as, for example, aluminium, boron, nitrogen, zirconium, gallium, titanium, etc.

The modified colloidal silica particle of the invention has at least one polyalkyleneoxy moiety. The term "polyalkyleneoxy moiety", as used herein, refers to any polyalkyleneoxy group. The polyalkyleneoxy moiety has at least 3 alkyleneoxy units, or at least 4, or at least 5 or 10 alkyleneoxy units, suitable ranges include from 3 to 20, or from 3 to 10; and it may have up to 150 and suitably up to 100 alkyleneoxy units, or from 10 to 100, or from about 12 to about 90, or from about 15 to about 60 alkyleneoxy units, and examples of suitable alkyleneoxy units include ethyleneoxy and propyleneoxy units, preferably ethyleneoxy units.

The polyalkyleneoxy moiety may include any propoxy and/or ethoxy polyalkalene or copolymer thereof, for example polyethylene glycol (PEG), polypropylene glycol (PPG) or copolymer comprising ethylene glycol and propylene glycol units. The polyalkyleneoxy moiety is terminated by an alkyl groups, e.g. methyl, ethyl, propyl and butyl groups, preferably methyl groups, or decyl, undecyl, dodecyl, tridecyl, tetradecyl, pentadecyl, or a hexadecyl group.

Preferably, the modified silica particle according to the invention is not modified by an ethylenically unsaturated group, or attached to a photosensitive lithographic printing plate.

The modified colloidal silica particle of the invention has at least one polyalkyleneoxy moiety which may be illustrated by the following general formula:

-(-O-CH(R¹)-CH₂-)ₙ-O-R²

in which n represents an integer of at least 3 or at least 4, or at least 5 or 10, suitable ranges include from 3 to 20, or from 3 to 10; and it may be up to 150, suitably up to 100, from 10 to 100, or from 12 to 90, or from 15 to 60; R¹ represents H or CH₃; and R² represents an alkyl group having from 1-20 carbon atoms, suitably from 1 to 4 carbon atoms, or from 2 to 3 carbon atoms, e.g. CH₃, C₂H₅, C₃H₇ and C₄H₉, preferably CH₃, or from 10 to 16 carbon atoms.

According to one preferred embodiment, when n is between 10 and 150 or 100, then R² has between 1 and 4 carbon atoms.

According to another preferred embodiment, when n is between 3 and 20, then R² has between 10 and 16 carbon atoms.

The modified colloidal silica particle may have a surface density of polyalkyleneoxy moiety to silica surface from about 0.05 to about 4, or from about 0.1 to about 1 µmoles/m² silica surface.

The polyalkyleneoxy moiety is covalently linked to the silica particle, either directly by a covalent bond to the silica particle, or covalently linked to the silica particle by a linking agent, preferably covalently linked to the silica particle by a linking agent. Accordingly, the modified colloidal silica particle of the invention may contain a linking agent or moiety thereof. Examples of suitable linking agents include silanes. Examples of suitable silanes include alkoxy silanes and alkyl silanes. Examples of suitable alkoxy silanes include isocyanate silane, silanes containing an epoxy group (epoxy silane), glycidoxy and/or a glycidoxypropyl group such as gamma-glycidoxypropyl trimethoxysilane, gamma-glycidoxypropyl methyldiethoxysilane, (3-glycidoxypropyl)trimethoxy silane, (3-glycidoxypropyl) hexyltrimethoxy silane, beta-(3,4-epoxycyclohexyl)-ethyltriethoxysilane. Examples of preferred alkoxy silanes include epoxide silanes, suitably containing a glycidoxy or glycidoxypropyl group, particularly gamma-glycidoxypropyltrimethoxysilane and/or gamma glycidoxypropylmethyl-diethoxysilane.

According to one embodiment, when using a linking agent, the molar ratio of linking agent, e.g. alkoxy silane as defined above, to polyalkyleneoxy moiety may be from about 0.5 to about 1.5, more preferably from about 0.75 to about 1.3, and most preferably from about 0.9 to about 1.2.

According to one embodiment of the modified silica particle according to the invention, the modified colloidal silica particle is covalently linked by a siloxane bond formed by condensation of a silane to the at least one polyalkyleneoxy moiety.

The modified colloidal silica particle of the invention may be illustrated by the following general formula:

SiO₂-(X-)ₘ-(-O-CH(R¹)-CH₂-)ₙ-O-R²

in which SiO₂ represents a colloidal silica particle, X represents a linking agent or moiety thereof, m represents an integer of 0 or 1, preferably 1, n represents an integer of at least 3, or at least 4, or at least 5 or 10, suitable ranges include from 3 to 20, or from 3 to 10; and it may be up to 150, suitably up to 100, suitably from 10 to 100, or from 12 to 90, or from 15 to 60; R¹ represents H or CH₃; and R² represents an alkyl group having from 1-20 carbon atoms, suitably from 1 to 4 carbon atoms e.g. CH₃, C₂H₅, C₃H₇ and C₄H₉, or having from 10 to 16 carbon atoms.

The modified colloidal silica particle of the invention may further comprise at least one hydrophobic moiety linked thereto. The term "hydrophobic moiety", as used herein, means a hydrocarbon moiety or group having at least three carbon atoms, e.g. alkyl groups, preferably alkyl groups containing from 3 to 8 carbon atoms, e.g. propyl, n-butyl, iso-butyl, t-butyl, n-hexyl, octyl and phenyl.

The hydrophobic moiety may be covalently linked to the silica particle, either directly by a covalent bond to the silica particle, or covalently linked to the silica particle by a linking agent, preferably covalently linked to the silica particle by a linking agent. Examples of suitable linking agents include those defined above. The modified colloidal silica particle may have a surface density of hydrophobic moiety to silica surface of from about 0.05 to about 4, or from about 0.1 to about 1 µmoles/m² silica surface, and it may have a molar ratio of hydrophobic moiety to polyalkyleneoxy moiety from about 0.1 to about 10, suitably from about 0.5 to about 5. For example, it may be about 10% CH₃-PEG-groups and 12.5% isobutylgroups of the total available silanol groups on the silica surface.

The alkoxy silanes may form stable covalent siloxane bonds (Si-O-Si) with the silanol groups on the surface of the colloidal silica particles. Hence, by having the colloidal silica particle covalently linked by an alkoxy silane to the at least one polyalkyleneoxy moiety having at least 3 alkyleneoxy units according to the invention, the colloidal silica particles become surface modified and amphiphilic.

The present inventors have surprisingly found that by modifying the colloidal silica particles according to the invention, amphiphilic surface modified silica particles may be obtained. Such surface modified silica particles not only stabilize droplets by particle stabilization, but also by their inherent surface activity. The combination of activity is powerful to obtain stable emulsions.

According to yet another aspect of the invention, it provides a method of producing a modified colloidal silica particle comprising reacting at least one first polyalkyleneoxy compound having at least about 3 alkyleneoxy units with a colloidal silica particle to form a covalent link between said at least one first polyalkyleneoxy compound and said silica particle.

The colloidal silica particle may be derived from e.g. precipitated silica, micro silica (silica fume), pyrogenic silica (fumed silica), silica sols or silica gels with sufficient purity, and mixtures thereof. The silica particle is in the colloidal range of particle size; it may have an average particle diameter ranging from about 2 to about 150 nm, preferably from about 3 to about 50 nm, and most preferably from about 5 to about 40 nm. The particle diameter may be calculated from the formula relating to specific surface area and particle diameter on page 465 in Iler (The Chemistry of Silica, Wiley, 1979). As conventional in silica chemistry, the particle size refers to the average size of the primary particles. The silica particle may contain other elements such as, for example, aluminium, boron, nitrogen, zirconium, gallium, titanium, etc.

Suitably, the colloidal silica particles have a specific surface area from about 20 to about 1500, preferably from about 50 to about 900, and most preferably from about 70 to about 800 m²/g. The specific surface area can be measured by means of titration with NaOH as described by Sears in Analytical Chemistry 28(1956), 12, 1981-1983 and in U.S. Patent No. 5,176,891. The given area thus represents the average specific surface area of the particles.

When present as a silica sol, the colloidal silica sol may have an S-value from about 15 to about 100, or from about 60 to about 90. The S-value depends on the silica content, viscosity, and density of the colloidal silica particles. The S-value can be measured and calculated as described by Iler & Dalton in J. Phys. Chem. 60 (1956), 955-957. A high S-value indicates a low microgel content. The S-value represents the amount of SiO₂ in percent by weight present in the dispersed phase of the silica sol.

The colloidal silica particles are suitably dispersed in an aqueous solvent, suitably in the presence of counter ions such as K⁺, Na⁺, Li⁺, NH₄⁺, organic cations, primary, secondary, tertiary, and quaternary amines, or mixtures thereof so as to form an aqueous silica sol.

However, also dispersions comprising organic solvents, e.g. lower alcohols, acetone or mixtures thereof may be used, suitably in an amount of from about 1 to about 20, preferably from about 1 to about 10, and most preferably from about 1 to about 5 volume percent of the total solvent volume. However, aqueous silica sols without any further solvents are preferably used. Cation exchanged colloidal silica sols may also be used. The colloidal silica particles may be negatively or positively charged, but uncharged silica sols may also be used. Suitably, the silica content in the sol is from about 5 to about 80, preferably from about 7 to about 70, and most preferably from about 10 to about 40 wt%. The pH of the silica sol suitably is from about 1 to about 12, preferably from about 1.5 to about 11, and most preferably from about 2 to about 10.

Boron-modified silica sols are described in e.g. US 2,630,410. Aluminium-modified silica sols are described in e.g. "The Chemistry of Silica", by Iler, K. Ralph, pages 407-409, John Wiley & Sons (1979) and in US 5 368 833. The aluminium-modified silica particles suitably have an Al₂O₃ content of from about 0.05 to about 3 wt%, preferably from about 0.1 to about 2 wt%.

The term "polyalkyleneoxy compound", as used herein, refers to an organic compound having a polyalkyleneoxy group having at least about 3 alkyleneoxy units, or at least 4, or at least 5 or 10 alkyleneoxy units, suitable ranges include from 3 to 20, or from 3 to 10; and it may have up to 150 and suitably up to 100 alkyleneoxy units, or from 10 to 100, or from about 12 to about 90, or from about 15 to about 60 alkyleneoxy units, and examples of suitable alkyleneoxy units include ethyleneoxy and propyleneoxy units, preferably ethyleneoxy units.

The polyalkyleneoxy compound may include any propoxy and/or ethoxy polyalkalene or copolymer thereof, for example polyethylene glycol (PEG), polypropylene glycol (PPG) or copolymer comprising ethylene glycol and propylene glycol units. The polyalkyleneoxy compound is terminated by an alkyl groups, e.g. methyl, ethyl, propyl and butyl groups, preferably methyl groups, or decyl, undecyl, dodecyl, tridecyl, tetradecyl, pentadecyl, or a hexadecyl group.

According to one preferred embodiment, when n is between 10 and 150 or 100, then the polyalkyleneoxy compound is terminated by a methyl, ethyl, propyl or butyl group.

According to another preferred embodiment, when n is between 3 and 20, then the polyalkyleneoxy compound is terminated by a decyl, undecyl, dodecyl, tridecyl, tetradecyl, pentadecyl, or a hexadecyl group.

Preferably, polyethylene glycol mono methyl ether having a weight average molecular weight of from about 500 g/mole (MPEG 500) to about 5000 g/mole (MPEG 5000), or having a molecular weight of from 550 to about 2000 g/mole; or having a molecular weight of from about 600 g/mole to about 1000 g/mole, may be used.

The reaction of the first polyalkyleneoxy compound with the colloidal silica particle is performed at a temperature suitable for performing the reaction, preferably from about 20 to about 110, more preferably from about 50 to about 100, and most preferably from about 80 to about 95 °C. Preferably, the first polyalkyleneoxy compound is added to the silica particles under vigorous agitation at a temperature of about 80 °C and at a controlled rate, which suitably is from about 0.01 to about 0.15 µmoles/m² colloidal silica surface area per hour. The addition can be continued for a suitable time for achieving the reaction, depending on the addition rate and amount of polyalkyleneoxy compound to be added. However, the addition is preferably continued for about 24 hours, more preferably for about 2 hours until a suitable amount of polyalkyleneoxy compound has been added.

According to one embodiment, the first polyalkyleneoxy compound may be diluted before reacting it with the colloidal silica particles, preferably with water to form a premix.

Furthermore, reaction of the first polyalkyleneoxy compound and the silica particle according to the invention may be carried out at a pH from about 2 to about 10.

The first polyalkyleneoxy compound may be a polyalkyleneoxy compound as defined above, or a polyalkyleneoxy compound as defined above covalently linked to a linking agent. Accordingly, the method of the invention may further comprise a step of preparing the first polyalkyleneoxy compound by reacting at least one silane, e.g. an alkoxy silane or amine silane, preferably an alkoxy silane with at least one second polyalkyleneoxy compound having at least about 3 alkyleneoxy units. The second polyalkyleneoxy compound may thus be an organic compound having a polyalkyleneoxy group having at least about 3 alkyleneoxy units, or at least 4, or at least 5 or 10 alkyleneoxy units, suitable ranges include from 3 to 20, or from 3 to 10; and it may have up to 150 and suitably up to 100 alkyleneoxy units, or from 10 to 100, or from about 12 to about 90, or from about 15 to about 60 alkyleneoxy units, and examples of suitable alkyleneoxy units include ethyleneoxy and propyleneoxy units, preferably ethyleneoxy units. The second polyalkyleneoxy compound may be a polyalkyleneoxy compound as defined above.

Examples of suitable alkoxy silanes include isocyanate silane, silanes containing an epoxy group (epoxy silane), glycidoxy and/or a glycidoxypropyl group, such as gamma-glycidoxypropyl trimethoxysilane, gamma-glycidoxypropyl methyldiethoxysilane, (3-glycidoxypropyl)trimethoxy silane, (3-glycidoxypropyl) hexyltrimethoxy silane, beta-(3,4-epoxycyclohexyl)-ethyltriethoxysilane. Examples of preferred alkoxy silanes include epoxide silanes, suitably containing a glycidoxy or glycidoxypropyl group, particularly gamma-glycidoxypropyltrimethoxysilane and/or gamma glycidoxypropylmethyldiethoxysilane.

The reaction of the second polyalkyleneoxy compound and the silane is preferably carried out in an organic solvent, preferably under stirring. Such a solvent may be an aprotic solvent. Examples of such an aprotic solvent may for example be acetonitrile, acetone or toluene. The addition of an acid or a base facilitates the reaction, by making the components reactive. When an alkoxy epoxide silane is used, without being bound to any theory, it is believed that the acid or base makes the alkoxy epoxide silane reactive by opening the epoxide ring. An amount of acid or base is thus added to the mixture of alkoxy silane and the polyalkyleneoxy compound in organic solvent. The acid may for example be acetic acid, toluene sulfonic acid, formic acid, trifluoroacetic acid or calcium trifluoromethanesulfonate, preferably trifluoroacetic acid. The amount and concentration of acid added to the reaction may for example be 10 mol% per mole gamma-glycidoxypropyltrimethoxysilane, or may be added in double stoichiometric proportions. The base may for example be sodium hydroxide or potassium hydroxide. The amount and concentration of base added to the reaction may for example be added stoichiometrically to the amount of added gamma-glycidoxypropyltrimethoxysilane.

The organic solvent may be evaporated after reaction of the second polyalkyleneoxy compound and the alkoxy silane and re-circulated to the reaction. Volatile acids, like trifluoroacetic acid, may also be recovered by evaporation. Furthermore, the reaction step above may be carried out at a temperature from about 40 to about 150 °C, more preferably from about 50 to about 130 °C, and most preferably from about 60 to about 110 °C. The reaction may be heated for a period of about 30 to about 300 minutes, preferably from about 60 to about 140 minutes. After this reaction step, the temperature may be decreased to a temperature from about 20 to about 50 °C.

Preferably, the colloidal silica particles, the alkoxy silane and the polyalkyleneoxy compounds and their proportions are as defined above.

In order to control the hydrophobic/hydrophilic balance of the silica particles, hydrophobic compounds, e.g. hydrophobic silanes, such as isoalkylsilanes, alkylsilanes and alkylaminesilanes, may be reacted with said colloidal silica particles in proportions as defined above. Examples of suitable hydrophobic silanes include silane having a hydrocarbon moiety or group having at least three carbon atoms, e.g. alkyl group, preferably alkyl groups having from 3 to 8 carbon atoms, e.g. propyl, n-butyl, iso-butyl, t-butyl, n-hexyl, octyl and phenyl. Example of suitable hydrophobic silanes include isobutyl(trimethoxy) silane, and trimethoxypropyl silane. Such reaction may take place before, after or simultaneously with reacting the first or second polyalkyleneoxy compound with the colloidal silica particles.

Suitably, at least about 0.5 or 1 % by number of the silanol surface groups on the colloidal silica particles are capable of binding or linking to silane groups on the silane compounds, more preferably at least about 5 %, bind or link to a silane group.

After the resulting dispersion of modified colloidal silica particles are formed, the silica particles may be purified, e.g. by ultra filtration.

The invention also relates to an aqueous dispersion comprising modified colloidal silica particles of the invention.

The modified colloidal silica particles and dispersion thereof according to the invention are capable of forming stable emulsions when added to immiscible phases.

The invention also relates to a composition comprising a mixture of the modified colloidal silica particle according to the invention and the at least one first polyalkyleneoxy compound having at least about 3 alkyleneoxy units. Said first polyalkyleneoxy compound may be a polyalkyleneoxy moiety having at least about 3 alkyleneoxy units, and may further be covalently linked to an alkoxy silane.

The ratio in the composition of the modified colloidal silica particle according to the invention and the at least one first polyalkyleneoxy compound may be from 0.1 to 10, preferably from 0.5 to 5.

Studies on the use of the modified colloidal silica particles and dispersion thereof of the invention in making emulsions of oil and water have shown that it only takes about 0.5 wt% silica particles of the oil phase weight to obtain a stable oil-in-water emulsion. Compared with commercial dispersants and emulsifiers, e.g. fatty alcohol ethoxylates, this is a significantly smaller amount. Typical amounts required when using such dispersants/emulsifiers are 2-3 wt% of the oil phase weight. The combination of the particle stabilizing effect in combination with the surface modification allows the modified colloidal silica particles to adsorb readily at oil/water interfaces. Thus, the present invention provides very efficient emulsifiers and storage-stable emulsions.

The total solid content of the dispersion comprising surface modified colloidal silica particles suitably is from about 1 to about 80, preferably from about 2 to about 40 wt%.

Preferably, the modified colloidal silica particles are present as discrete particles in the dispersion. They may associate with each other by hydrogen bonding and settle. However, they are readily redispersible upon addition of mechanical energy.

The stability of the dispersion facilitates the handling and application thereof in any use since it allows for storage and need not be prepared on site immediately before usage. The dispersion is also beneficial in the sense that it does not involve hazardous amounts of toxic components. By "aqueous dispersion" is meant a dispersion whose solvent substantially is comprised of water. The dispersion preferably does not contain any organic solvent. However, according to one embodiment, a suitable organic solvent miscible with water may be comprised in the substantially aqueous dispersion in an amount from about 1 to about 20, preferably from about 1 to about 10, and most preferably from about 1 to about 5 volume percent of the total volume. This is due to the fact that for some applications, a certain amount of organic solvents may be present without any detrimental environmental effects.

The invention also relates to the use of an effective amount of the modified colloidal silica particle or aqueous dispersion thereof as an emulsifier. Such effective amount may be from 0.5 % by weight, or from 1 %, of the modified particles in the emulsion. Examples of suitable uses include emulsifying agriculturally active ingredients, asphalts or paper sizing agents, e.g. cellulose-reactive sizing agents such as those based on alkenyl succinic anhydride (ASA) and alkyl ketene dimers (AKD).

According to an embodiment, the modified colloidal silica particle and aqueous dispersion thereof according to the present invention may be used to prepare oil-in-water emulsions (O/W emulsions) of an agriculturally active ingredient, such as pesticides and plant growth regulators. An emulsion concentrate typically comprises an agricultural active ingredient, a water-insoluble solvent, and an emulsifier, and when added to water, it spontaneously, or after active mixing, e.g. stirring, forms an oil-in-water emulsion, the agricultural active primarily being present in the emulsion droplets.

Preferred agriculturally active ingredients contemplated for use in the present invention include pesticides and plant growth regulators of the classes triazoles, strobilurins, alkylenebis(dithiocarbamate) compounds, benzimidazoles, phenoxy carboxylic acids, benzoic acids, sulfonylureas, triazines, pyridine carboxylic acids, neonicotinides, amidines, organophosphates, and pyrethroids.

The water insoluble solvent may be any aromatic hydrocarbon suitable for use in agricultural formulations.

Examples of such aromatic hydrocarbons include, toluene, xylene and other alkylated benzenes, such as trimethyl benzene, methyl ethyl benzene, *n*-propyl benzene, isopropyl benzene, methyl isopropyl benzene, methyl *n*-propyl benzene, diethylbenzene, tetramethylbenzene, and mixtures of two or more thereof, optionally with additional components. Industrial aromatic hydrocarbons, such as Solvesso 100, Solvesso 150, Solvesso 150 ND, Solvesso 200 and Solvesso 200 ND available from ExxonMobil, Shellsol X7B, Shellsol A100, Shellsol A150 and Shellsol A150ND, available from Shell Chemicals, and Farbasol, available from Orlen Oil, are also contemplated as the aromatic hydrocarbon for use in the present invention.

Thus, present invention also relates to an aqueous, oil-in-water, emulsion comprising the modified silica particles of the present invention, at least one agriculturally active ingredient, and an aromatic hydrocarbon.

By using the modified colloidal silica particle and dispersion thereof according to the present invention as an emulsifier, small droplets of agriculturally active ingredients may be sprayed onto the crops and still cover large areas of crops, thus avoiding excessive amounts of agriculturally active ingredients in the agricultural industry. Also for this purpose, it is of course important that the emulsifier itself is environmentally friendly.

As used herein, the term "emulsion" shall be interpreted to include macro emulsions, nano emulsions, micro emulsions and suspo-emulsions, i.e. emulsions in which a particulate solid is suspended.

According to another embodiment, the modified colloidal silica particles and aqueous dispersion thereof according to the present invention may be used to prepare emulsions of asphalts.

Asphalt and other bituminous pavements are composed of a bituminous cement, stone dust, sand and/or broken stone. The mixtures for such use are produced, largely, by heating separately sand, stone and bituminous cement, combining these hot materials with unheated stone dust and then, while still hot, laying and compressing them over some suitable form of foundation as the wearing surface of a pavement

An emulsifier is used to emulsify bitumen, such as an asphalt or tar, in water, to be used as a bonding or coating agent for such uses as road pavements, waterproof embankments, roofings etc. It is necessary to obtain a sufficient bond between the surface of the substrate, such as aggregate, sand, soil, a cement concrete or metal, and the bitumen.

Today some emulsifiers for bitumen in asphalt applications are toxic and not readily biodegradable. They may consist of fatty amines wherein the hydrophobic moiety is relatively long, approximately C₁₄-C₂₂, and the hydrophilic amines are primary (and/or secondary), quarternized or reacted with ethylene oxide. These amines dictate the breaking process of the emulsion and allow controlling the properties of different emulsions. They also provide adhesion properties between the bitumen and the aggregate, when the aggregate consists of silicates.

The bitumen has a temperature of approximately 145 °C and the water/emulsifier solution has a temperature of 50 to 70 °C. The emulsion temperature is around 90 °C directly after emulsification. It is thus important that the emulsifier can withstand these temperatures.

The present modified colloidal silica particles and aqueous dispersion thereof may be used as environmentally friendly emulsifiers for bitumen in asphalt application to improve the bondability of the bitumen.

According to another embodiment, the modified colloidal silica particles and aqueous dispersion thereof according to the present invention may be used to prepare emulsions for use in sizing in paper making.

Cellulose-reactive sizing agents such as those based on alkenyl succinic anhydride (ASA) and alkyl ketene dimers (AKD) are widely used in papermaking at neutral or slightly alkaline stock pH's in order to give paper and paper board some degree of resistance to wetting and penetration by aqueous liquids. Paper sizes based on cellulose-reactive sizing agents are generally provided in the form of dispersions containing an aqueous phase and finely divided particles or droplets of the sizing agent dispersed therein. The dispersions are usually prepared with the aid of a dispersant system consisting of an anionic compound, in combination with a high molecular weight amphoteric or cationic polymer.

Despite the fact that considerable improvements have been achieved in the preparation, properties and performance of aqueous dispersions of cellulose-reactive sizing agents, there are still some technical problems associated with the use of such dispersions. Usually, dispersions of cellulose-reactive sizing agents, e.g. alkenyl succinic anhydrides, exhibit poor stability, which evidently leads to difficulties in handling the dispersions, for example on storage and in use. By using the modified colloidal silica particles of the invention, efficient and environmentally friendly emulsifiers for paper sizing agents are provided.

According to another aspect, the invention also relates to the use of an effective amount of the present modified colloidal silica particles and dispersion thereof as a dispersant for oil spills. The formed dispersion of small droplets of oil may be degraded by the biotic environment, as compared to the thick layer of oil spill that destroy or harm large areas and the living organisms existing there. It is also of great importance that the components of the invention are environmentally friendly and not harmful to the aquatic and biotic environment upon degradation. Many dispersants for oil spill used today are not environmentally friendly.

The invention is further illustrated in the following examples which, however, are not intended to limit the same. Parts and % relate to parts by weight and % by weight, respectively, unless otherwise stated.

### Examples

The following reactants were used in the examples:

### Colloidal silicas

- colloidal silica particles having a specific surface area of 130 m²/g in the form of an aqueous sol having a SiO₂ content of 30%, available under the designation Bindzil® 30/130;
- colloidal silica particles having a specific surface area of 130 m²/g in the form of an aqueous sol having a SiO₂ content of 40%, available under the designation Bindzil® 40/130; and
- colloidal silica particles having a specific surface area of 500 m²/g in the form of an aqueous sol having a SiO₂ content of 15%, available under the designation Bindzil® 15/500;
- colloidal silica particles having a specific surface area of 700 m²/g in the form of an aqueous sol having a SiO₂ content of 15%, available under the designation Eka NP442; all available from Eka Chemicals AB, Sweden.

### Polymers

- polyethylene glycol mono methyl ether with a molecular weight of 500 g/mol, (MPEG 500), 550 g/mol, (MPEG 550), 2000 g/mol (MPEG 2000) and 5000 g/mol, (MPEG 5000); all commercially available from Sigma Aldrich.

### Silanes

- 3-glycidoxy-propyl trimethoxy-silane, also referred to as 3-GTO, which is commercially available under the designation Silquest Wetlink 78 from Crompton S.A., Switzerland.
- 2-(methoxy(polyethyleneoxy) propyl) trimethoxysilane (2-MPPT) with 9-12 ethoxylate units and a molecular weight of 591-719 g/mol from Gelest.
- N-(trimethoxysilyl)propyl-N,N,N-trimethylammonium chloride (N-TNTC) dissolved at a concentration of 50 wt% in methanol from Gelest.
- octan-1-ol, butan-1-ol and isobutyltrimethoxy silanes from Silquest.

### Example 1

Reaction of 3-GTO with a hydrophilic compound or a hydrophobic compound was done according to the following general procedure:

Reaction of 3-GTO with MPEG 2000: 25 g of MPEG 2000 was added to 150 ml of acetonitrile in a round flask. 3.25 g of 3-GTO (excess of 10% molar) was added at room temperature under stirring. Finally acetic acid (catalyst 10% molar) was added and the mixture was heated for 2 h. An excess of 3-GTO was used only for reaction with MPEG.

The reaction of 3-GTO with MPEG to form a polyalkyleneoxy compound (3-GTO-MPEG) may be illustrated as follows:

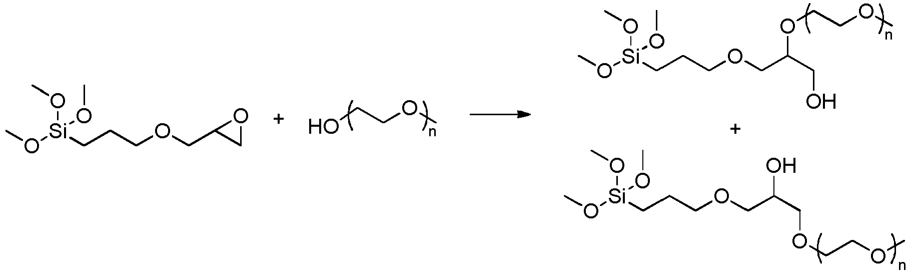

Reaction of 3-GTO-hydrophobic compound and 3-GTO-hydrophilic compound with a colloidal silica particle was done with the following general procedure:
Reaction of 3-GTO-MPEG 2000 (in order to graft 0.8 µmol/m²) and 3-GTO-butanol (in order to graft 0.4 µmol/m²) with colloidal silica particle 8 µmol SiOH: to 50 g of silica sol in a round flask was added 1.6 g of 3-GTO-MPEG 2000 and 446 mg of 3-GTO-butanol at room temperature under stirring. Finally the mixture was heated at 80 °C for 2 h.

Reaction of ethyl-modified silica sol was done with the following general procedure:
A deionised silica sol (27.8 wt% SiO₂; 130 m²/g), 800 g, was poured into a 1 dm³ two-necked round flask. The round flask was then put in an oil bath equipped with temperature control. Ethyltrimethoxysilane (CAS no. 5314-55-6, Gelest, USA), 8.6 g, was then added drop-wise under moderate stirring at room temperature. The temperature in the oil bath was then raised to 70 °C (60 °C in the round flask) and the sol was kept at this temperature for 1 h. Then, the temperature was increased to 80 °C in the oil bath (70 °C in the round flask) and the sol was kept under stirring at this temperature for 1 h. Finally, the ethyl-modified silica sol was cooled to room temperature and was transferred to a polypropylene bottle. The amount of ethyltrimethoxysilane added to the silica sol corresponds to 2 µmol/m².

The reaction of a colloidal silica particle with product from reaction with a polyalkyleneoxy compound (3-GTO-MPEG) may be illustrated as follows:

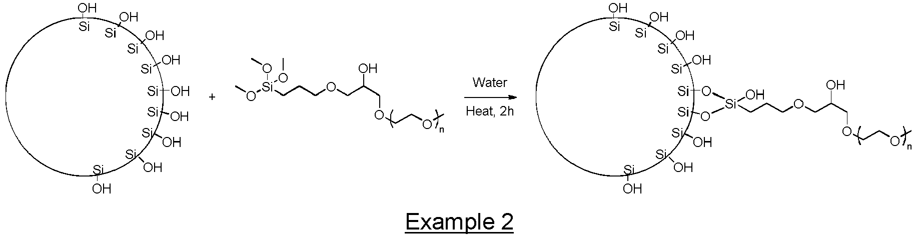

This example illustrates different general methods of purification of sols of modified colloidal silica particles:
Purification by ultracentrifugation: Example of purification of 1 g of sol of modified colloidal silica particles: addition of 2 ml water / centrifugation in tube with membrane (cutoff at 10k Da) at 5300 rpm for about 45 minutes. This was repeated 5 times.

Purification by suspension and centrifugation: About 4 g of sols of modified colloidal silica particles were put in a tube with 4 ml of water. Then the sample was vortexed to homogenize it and centrifuged at 5300 rpm for about 5 minutes. The supernatant was removed. This was repeated 3 times.

### Example 3

This example illustrates the preparation of modified colloidal silica particles of the invention:
3-GTO, 13.92 mmol, and MPEG 2000, 12.49 mmol, were dissolved in 150 cm³ acetonitrile (MeCN) and 1.375 mmol trifluoro acetic acid (TFA) was added. The solution was heated (82 °C) for 2 h. MeCN and TFA were then removed by evaporation. The resulting polyalkyleneoxy compound (3-GTO-MPEG 2000-1) was a solid yellowish material with a melting point of about 40 °C.

The sol of colloidal silica particles 30/130 was cation exchanged to pH 2 and 50 g of the cation exchanged silica sol was added to a 250 cm³ round flask. 3-GTO-MPEG 2000-1, 8.72 g, was heated to 80 °C and then added to the cation exchanged silica sol. The amount of added 3-GTO-MPEG 2000-1 corresponded to 2 µmol/m². After addition of 3-GTO-MPEG 2000-1, the mixture was heated at 90 °C for 2 h.

### Example 4

This example illustrates the preparation of other modified colloidal silica particles of the invention:
3-GTO, 13.96 mmol and MPEG 2000, 12.48 mmol, were dissolved in MeCN, 150 cm³ and calcium trifluormethane sulphonate (Ca(OTf)₂) 1.301 mmol, was added. The solution was heated for 2 h. The resulting polyalkyleneoxy compound (3-GTO-MPEG 2000-2) was partly a clear colorless liquid at room temperature.

The sol of colloidal silica particles 30/130 was cation exchanged to pH 2 and 50 g of the cation exchanged silica sol was added to a 250 cm³ round flask. 3-GTO-MPEG 2000-2, 8.72 g, was heated to 90 °C and then added to the cation exchanged silica sol. The amount of added 3-GTO-MPEG 2000-2 corresponded to 2 µmol/m². After addition of 3-GTO-MPEG 2000-2, the mixture was heated at 90 °C for 2 h. The resulting aqueous dispersion, or sol, of modified colloidal silica particles was stable. Also, after purification by ultra filtration the modified silica sol was a stable dispersion.

### Example 5

This example illustrates the preparation of other modified colloidal silica particles of the invention:
3-GTO, 8.63 mmol, and MPEG 550, 8.56 mmol, were dissolved in toluene, 50 cm³. A larger amount of TFA, 16.92 mmol, was then added to the solution and the solution was then heated at 60 °C for 2 h. After the reaction, TFA and then toluene were removed by evaporation. The resulting polyalkyleneoxy compound (3-GTO-MPEG 550-1) was a colorless liquid.

The sol of colloidal silica particles 30/130 was cation exchanged to pH 2 and 50 g of the cation exchanged silica sol was added to a 250 cm³ round flask. The round flask was placed in an oil bath at 60 °C. Isobutyltrimethoxysilane, 0.35 g, was heated to 90 °C and then added to the silica sol. After addition of isobutyltrimethoxysilane, the mixture was heated at 90 °C for 2 h. The amount of added isobutyltrimethoxysilane corresponded to 1 µmol/m². The mixture was purified by ultra filtration and the resulting intermediate sol of colloidal silica particles was stable.

A portion of 3-GTO-MPEG 550-1 was heated to 90 °C and subsequently added to a portion of the intermediate sol of colloidal silica particles heated to 90 °C. The mixture obtained was then heated at 90 °C for 2 h. The amount of 3-GTO-MPEG 550-1 corresponded to about 1 µmol/m². The resulting aqueous dispersion, or sol, of modified colloidal silica particles was purified by ultra filtration and found to be stable.

### Example 6

This example illustrates the preparation of other modified colloidal silica particles of the invention:

### Synthesis step 1

300 g of Bindzil 40/130 colloidal silica was diluted to a concentration of 5 wt% silica with water adjusted to pH 9.5 with sodium hydroxide. This diluted silica sol was then equipped with stirring and reflux cooling and heated to 90 °C in an oil bath. When the temperature reached 90 °C, 57.5 g aqueous 2-MPPT was added drop wise during 15 minutes, the 2-MPPT was dissolved in water at a concentration of 25 wt% and kept under constant stirring 20 h prior to the addition. The reaction mixture was then kept at 90 °C for 24 h before it was cooled to room temperature.

The added amount of the 2-MPPT corresponds to a surface coverage of 1 µmol/m². The samples were analyzed by a High Performance Liquid Chromatography (HPLC) system with degasser, Kromasil C18 column, 100A, 5 um, 250x4.6 mm; Detector RI (Refractive Index); Eluent, MeOH/H2O 30/70 vol/vol; Flow rate, 0,5 ml/min; Injector loop: 20 ul. According to HPLC results, 43% of the added 2-MPPT became covalently grafted to the silica surface.

### Synthesis step 2

200 g of the product from synthesis step 1 was equipped with stirring and reflux cooling and then heated to 90 °C in an oil bath. When the temperature had reached 90 °C, 0,721 ml 50% 3-TNTC in methanol was added drop wise during 5 minutes. The reaction mixture was then kept at 90 °C for 24 h before it was cooled to room temperature. The added amount of the 3-TNTC corresponds to a surface coverage of 1 µmol/m².

### Example 7

This example illustrates the preparation of other modified colloidal silica particles of the invention:
Synthesis step 1 of Example 6 was followed, except that Bindzil 15/500 colloidal silica was used.

According to HPLC results, 44% of the added 2-MPPT became covalently grafted to the silica surface.

### Example 8

This example illustrates the preparation of other modified colloidal silica particles of the invention:

### Synthesis step 1

Example 7 was followed, which resulted in that 44% of the added 2-MPPT became covalently grafted to the silica surface.

### Synthesis step 2

200 g of the product from synthesis step 1 was equipped with stirring and reflux cooling and heated to 90 °C in an oil bath. When the temperature had reached 90 °C, 0.955 ml isobutyl trimethoxysilane was added drop wise during 5 minutes. The reaction mixture was then kept at 90 °C for 24 h before it was cooled to room temperature.

The added amount of the isobutyl trimethoxysilane corresponds to a surface coverage of 1 µmol/m².

### Example 9

This example illustrates the preparation of a mixture of colloidal silica particles with MPEG 500:
33,33 g of Bindzil 15/500 colloidal silica was diluted to a concentration of 5 wt% silica particles with water adjusted to pH 9,5. Thereafter 1,249 g MPEG 500 was added to the diluted silica sol and the container was thoroughly shaken to dissolve and evenly distribute the MPEG 500 in the sample.

The added amount of the MPEG corresponds to a surface coverage of 1 µmol/m² SiO₂.

### Example 10

This example illustrates the preparation of other modified colloidal silica particles of the invention:
166.7 g Eka NP442 was diluted to a concentration of 5 wt% silica particles with water adjusted to pH 9,5 with sodium hydroxide. This diluted silica sol was then equipped with stirring and reflux cooling and heated to 90 °C in an oil bath. When the temperature reached 90 °C, 45.47 g aqueous 2-MPPT was added drop wise during 15 minutes, the 2-MPPT was dissolved in water at a concentration of 25 wt% and kept under constant stirring 20 h prior to the addition. The reaction mixture was then kept at 90 °C for 24 h before it was cooled to room temperature.

The added amount of the 2-MPPT corresponds to a surface coverage of 1 µmol/m².

### Example 11

This example illustrates the preparation of other modified colloidal silica particles of the invention:

### Synthesis step 1

44.0 g MPEG 2000 was dried for 16 hours at 60 °C and was then dissolved in 100 ml toluene, followed by addition of 0.409 ml TFA. This solution was equipped with stirring and reflux cooling and heated to 60 °C in an oil bath, and when 60 °C was reached, 2.988 g 3-GTO was added during 2 hours. After 5 hours at 60 °C, the toluene was evaporated at reduced pressure. The product was dissolved in aqueous solution which was pH adjusted to 9.55 by sodium hydroxide. It was then dialyzed in through a membrane with a molecular cutoff of 3.5 kDa in aqueous solution during 24 hours, the dialyzed product was then concentrated to 29.96 wt% through evaporation of water at reduced pressure.

### Synthesis step 2

12.5 g of Bindzil 40/130 colloidal silica was diluted to a concentration of 5 wt% silica with water adjusted to pH 9,5 by sodium hydroxide. This diluted silica sol was then equipped with stirring and reflux cooling and heated to 90 °C in an oil bath. When the temperature reached 90 °C, 47.69 g of the product from synthesis step 1 was added drop wise during 10 minutes. The reaction mixture was then kept at 90 °C for 24 h before it was cooled to room temperature. 50 ml of this product was diluted to 200 ml with water adjusted to pH 9.5 by sodium hydroxide and ultrafiltered through a membrane with a cutoff of 100 kDa until the total volume once again was 50 ml, this was repeated six times.

The added amount of the product from synthesis step 1 corresponds to a surface coverage of 3.5 µmol/m². According to NMR diffusometry, this procedure yielded a surface coverage of 0.1 µmol MPEG/m² silica.

### Example 12

This example illustrates emulsification of dodecane (70 wt%) in water (30 wt%) by using modified colloidal silica particles of the invention:
To 4.5 g of water was added 178 mg of sol of modified colloidal silica particles containing 29.5 wt% of SiO₂ and 10.5 g of dodecane. Then the mixture was emulsified for 5 minutes with Heidolph DIAX 900 operating at 26000 rpm.

### Example 13

In this example, the emulsifying performance was tested of sols of modified colloidal silica particles of the invention prepared according to the procedures of examples 1 and 2. This test was done using 70 wt% of dodecane, 30 wt% of water and 0.5 wt% /wt dodecane of modified colloidal silica particles. Emulsification was done as described in example 12.

The type of this emulsion was determined using a water soluble dye (methylene blue). It appears that the continuous phase of these emulsions is the water. These emulsions are all oil in water. The results are given in Table 1.

**Table 1**

| **Modified colloidal silica particle sample** | **Silica sol Silanol conc. [µmol/m²]** | **Surface conc. of hydrophobic moiety added µmol/m²** | **Surface conc. of hydrophilic moiety added µmol/m²** | **Sucess of emulsion** | **Sucess of stabilization after 1h** |
|---|---|---|---|---|---|
| 1 | 8 | 0.8 3-GTO-butanol | 0.4 3-GTO-MPEG-2000 | Yes | No Wand D bigger than t=0 min |
| 2 | 8 | 0 | 0.4 3-GTO-MPEG-2000 | Yes | No Wand D bigger than t=0 min but slow evolution |
| 3 | 8 | 2 ethyl | 0.8 3-GTO-MPEG-2000 | Yes | Yes same as t=0 min |
| 4 | 8 | 1 isobutyl-trimetoxy-silane | 0.8 3-GTO-MPEG-2000 | Yes | Yes same as t=0 min |
| 5 | 8 | 2 isobutyl-trimetoxy-silane | 0.8 3-GTO-MPEG-2000 | Yes | Yes same as t=0 min |

| | | | | | |
|---|---|---|---|---|---|
| "W": water phase / "D": dodecane phase | | | | | |

Samples 3-5 are the three samples of modified colloidal silica particles that give the best results. Indeed these emulsions were all stable after 1 h. It is noticed in Table 4 below that these types of sols of modified colloidal silica particles have a low surface tension.

### Example 14

This example illustrates emulsification of Solvesso 150ND from Valspar, an aromatic hydrocarbon, by using modified silica particles of the invention.

12 g of the modified silica sols according to the present invention were added to a vial, followed by addition of 8 g Solvesso 150ND. This mixture was the mixed for 1 minute in an Ultra Turrax (T25 basic, dispersion element of 17 mm, IKA) at 11 000 rpm.

The emulsion obtained with the modified silica sol according to example 7 was white and foamy, with fairly low viscosity, while creaming occurred after one hour. No phase separation occurred within five days.

The emulsion obtained with the silica sol mixed with MPEG 500 according to example 9 was white with fairly low viscosity. Within ten minutes the upper half of the emulsion appeared more yellow than the lower part which appeared less concentrated. Within a couple of hours the emulsion had started to phase separate.

The emulsion obtained with the modified silica sol according to example 11 was white and foamy, with fairly low viscosity, and creaming occurred after one hour.

Table 2 displays the droplet size distribution measured 2 hour after the preparation of the above emulsions with Malvern Mastersizer Micropuls. At this time the emulsion prepared with the silica sol mixed with MPEG 500 according to example 9 had already started to phase separate, while no such tendencies could be detected in the emulsion prepared with the modified silica sol according to example 7 and 11, except for minor creaming. In Table 2, droplet size (D) as a function of the volume average distribution (v) for Solvesso 150ND emulsions stabilized by the silica particles according to the invention are shown.

**Table 2**

| | D(v, 0.1) µm | D(v, 0.5) µm | D(v, 0.9) µm |
|---|---|---|---|
| Emulsion with the modified silica sol according to example 7 | 1,46 | 12.20 | 22.43 |
| Emulsion with the silica sol mixed with MPEG 500 according to example 9 | 49.19 | 101.67 | 469.38 |
| Emulsion with the modified silica sol according to example 11 | 2.07 | 25.46 | 43.77 |

Thus, it is clear that the modified silica sols according to examples 7 and 11 are able to stabilize the emulsions, as opposed to the mixture of silica and MPEG according to example 9.

### Example 15

This example illustrates emulsification of paraffin oil by using modified silica particles of the invention.

The silica sols according to examples 7, 8, 9 and 10 were used to form these emulsions. 4.2 g of respective silica sol, 1.8 g H₂O and 14 g paraffin oil (Sigma-Aldrich) was mixed for 2 minutes using an Ultra Turrax (T25 basic, dispersion element of 17 mm, IKA) at 24000 rpm.

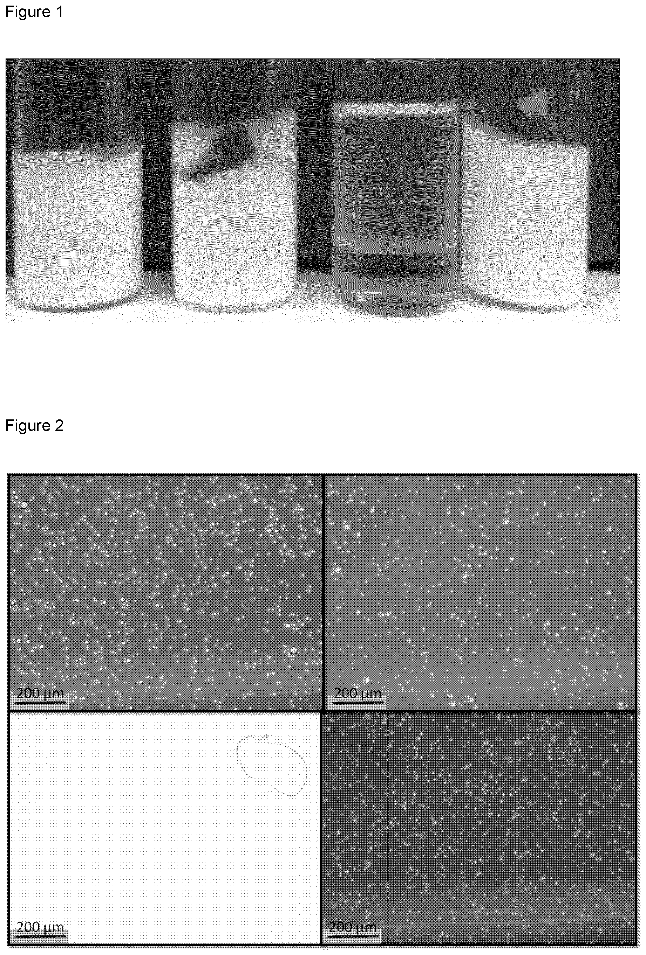

The appearance of the emulsions after 1-2 weeks are shown in figure 1 (from left to right: silica sols according to examples 7, 8, 9 and 10).

It is clear from figure 1 that all modified silica sols according to examples 7, 8 and 10 form stable emulsions. The silica sol from example 9 is a reference sol containing MPEG which merely is mixed with unmodified colloidal silica, i.e. not covalently bonded. This mixture separated quickly and no emulsion was formed.

In figure 2, microscope images of the emulsions diluted in water, two weeks after their preparation, are shown. Top left is the silica sol according to example 7, top right is the silica sol according to example 8, bottom left the silica sol according to example 9 and bottom right is the silica sol according to example 10.

It is clear that the three successful emulsions are oil-in-water emulsions. The sample formed using the reference sol from example 9 clearly does not form any emulsion droplets and could not be analyzed further. The size of the emulsion droplets was measured, which indicates that the emulsions formed using the modified sols from examples 8 and 10 resulted in a smaller droplet size compared to emulsions formed using the modified sols from example 7. This was also confirmed by measurement with a Malvern Mastersizer Micropuls and the results from these measurements are shown in Table 3.

**Table 3**

| Emulsion using the modified sol according to: | D(v,0.1) µm | D(v,0.5) µm | D(v,0.9) µm | S.S.A. m2/g |
|---|---|---|---|---|
| Example 7 | 7,8 | 17,7 | 38,3 | 1,2 |
| Example 8 | 0,4 | 10,6 | 24,5 | 4,6 |
| Example 10 | 0,5 | 7,1 | 15,5 | 4,1 |

These results show that by using emulsions formed by modified silica sol according to example 8 and 10, the emulsion droplets obtained are smaller, which results in more stable emulsions, however the emulsion formed with modified silica sol according to example 7 is also relatively good.

### Example 16

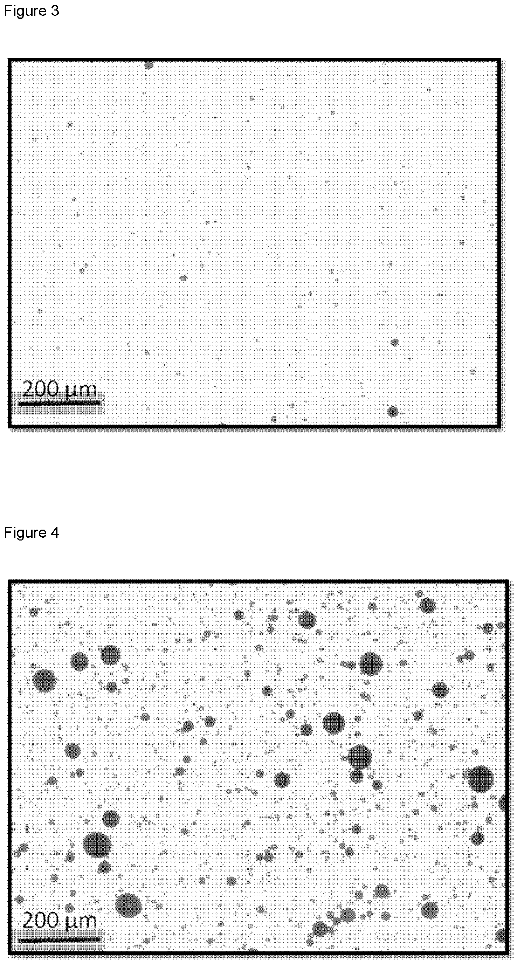

In this example, the modified silica sol according to example 6 was used to make bitumen emulsions. The emulsion was prepared by heating a mixture of 180 g water and 20 g of the modified silica sol according to example 6 to 70 °C in a metal can. During stirring with a high speed mixer (Ultra Turrax Silverson L4R, 8000 rpm), 20 g bitumen at 140 °C was added. After 2 minutes of high shear mixing, the emulsion was cooled to room temperature. During the addition of the hot bitumen, the emulsification was clearly shown by the color change from the black bitumen to the brownish emulsion and the fact that the bitumen didn't adhere to the metal can. The metal can and the mixing equipment was easy to clean. The emulsion droplets formed could easily be observed in a light microscope as small drops, see figure 3 below.

### Example 17

In this example, the modified silica sol according to example 6 was used to make fuel oil emulsions. The emulsion was prepared by heating a mixture of 225 g water and 25 g of the modified silica sol according to example 6 to 70 °C in a metal can. During stirring with a high speed mixer (Ultra Turrax, same as for example 14), 43 g fuel oil (Bunker 6 oil, 7SM046) at room temperature was added. After 2 minutes of high shear mixing, the emulsion was cooled to room temperature. During the addition of the fuel oil the emulsification was clearly shown by the color change from the black fuel oil to the brownish emulsion and that the fuel oil didn't adhere to the metal can. The metal can and the mixing equipment was easy to clean. The emulsion droplets formed could easily be observed in a light microscope as small drops, see figure 4 below.

### Example 18

In this example, surface tension measurements were carried out using sols of modified colloidal silica particles of the invention prepared according to the procedures of examples 1 and 2.

Surface tension measurements were carried out on a Sigma 70 tensiometer (KSV) using the De Noüy ring method to evaluate if the non grafted silica sol used and the grafted silica sol have any surface activity. The temperature was kept at 25 °C by a cryostat Neslab RTE-200.

Measurement of Silica sol 8 µmol SiOH and Silica sol 1 µmol Ethyl were made with a concentration of 10 wt % of SiO₂ in water and Silica sol 2 µmol Ethyl with a concentration of 5 wt % of SiO₂ in water. Surface tension values are given in Table 4:

**Table 4**

| **Modified colloidal silica particle sample** | **Type of silica sol** | **Surface conc. of hydrophobic moiety added [µmol/m²]** | **Surface conc. of hydrophobic moiety added [µmol/m²]** | **Silica conc. [wt%]** | **Surface tension value (mN/m)** |
|---|---|---|---|---|---|
| / | Bare silica sol | / | / | 10 wt % SiO₂ | 72.8 |
| / | Silica sol modified by hydrophobic moiety | Ethyl 2 | / | 5 wt % SiO₂ | 70.7 |
| 2 | Silica sol modified by hydrophilic moiety | / | MPEG 2000 0.4 | 5% SiO₂ | 61 |
| 6 | Silica sol modified by hydrophilic moiety | / | MPEG 2000 0.8 | 5% SiO₂ | 59 |
| 7 | Silica sol modified by hydrophobic moiety | 3-GTO-butanol 0.8 | / | 5% SiO₂ | 72 |
| 3 | Silica sol modified by hydrophobic moiety | Isobutyltri-metoxysilane 1 | / | 5% SiO₂ | 52 |
| 1 | Silica sol modified by hydrophobic and hydrophilic moiety | 3-GTO-butanol 0.8 | MPEG 2000 0.4 | 5% SiO₂ | 55 |
| 8 | Silica sol modified by hydrophobic and hydrophilic moiety | 3-GTO-butanol 0.4 | MPEG 2000 0.8 | 5% SiO₂ | 61 |
| 4 | Silica sol modified by hydrophobic and hydrophilic moiety | Isobutyltri-metoxysilane 1 | MPEG 2000 0.8 | 5% SiO₂ | 48 |
| 5 | Silica sol modified by hydrophobic and hydrophilic moiety | Isobutyltri-metoxysilane 2 | MPEG 2000 0.8 | 5% SiO₂ | 34 |
| 9 | Silica sol modified by hydrophobic and hydrophilic moiety | Ethyl 2 | MPEG 5000 1.36 | 5% SiO₂ | 53 |

It is clear from table 4 that the surface modified colloidal silica particles according to the invention decrease the surface tension.

### Comparative example

As a comparison, the surface tension for Bindzil® CC30 (a silanized silica sol) was measured at various pH values. For addition of 10 wt% of Bindzil® CC30, the surface tension only dropped from 71 to 66 mN/m, as compared to the sol of modified colloidal silica particles according to the present invention (see Colloids and Surfaces A: Physicochem. Eng. Aspects 337 (2009) 127-135).

## Claims

1. Modified colloidal silica particle covalently linked to at least one polyalkyleneoxy moiety having at least 3 alkyleneoxy units, wherein said polyalkyleneoxy moiety is terminated by an alkyl group.

2. Modified silica particle according to claim 1, wherein said modified colloidal silica particle is covalently linked by an alkoxy silane to said at least one polyalkyleneoxy moiety.

3. Modified silica particle according to claim 1 or 2, wherein said modified colloidal silica particle is covalently linked by a siloxane bond formed by condensation of a silane to said at least one polyalkyleneoxy moiety.

4. Modified silica particle according to any one of the preceding claims, wherein said modified colloidal silica particle is covalently linked by a siloxane bond formed by condensation of a silane containing at least one polyalkyleneoxy moiety.

5. Modified silica particle according to any one of the preceding claims, wherein said particle is not modified by an ethylenically unsaturated group or attached to a photosensitive lithographic printing plate.

6. Modified silica particle according to any one of the preceding claims, wherein said polyalkyleneoxy moiety is polypropylene glycol or polyethylene glycol or copolymers thereof.

7. Modified silica particle according to any one of the preceding claims, wherein said polyalkyleneoxy moiety is terminated by a methyl group.

8. Modified silica particle according to any one of the preceding claims, wherein the surface density of polyalkyleneoxy moiety to silica particle is from 0.1 to 4 µmoles/m² silica surface.

9. Modified silica particle according to any one of the preceding claims, wherein said polyalkyleneoxy moiety has from 3 to 100 alkyleneoxy units, preferably from 15 to 60 alkyleneoxy units.

10. Modified silica particle according to any one of the preceding claims, wherein it has a molar ratio of alkoxy silane to polyalkyleneoxy moiety from 0.5 to 1.5.

11. Modified silica particle according to any one of the preceding claims, further comprising at least one hydrophobic moiety linked thereto.

12. Modified silica particle according to any one of the preceding claims, wherein it has a molar ratio of hydrophobic moiety to polyalkyleneoxy moiety from 0.1 to 10.

13. Method of producing a modified colloidal silica particle according to claim 1 comprising reacting at least one first polyalkyleneoxy compound having at least 3 alkyleneoxy units with a colloidal silica particle to form a covalent link between said at least first polyalkyleneoxy compound and said silica particle, wherein said polyalkyleneoxy compound is terminated by an alkyl group.

14. Method according to claim 13, wherein it further comprises preparing said first polyalkyleneoxy compound by reacting at least one alkoxy silane with at least one second polyalkyleneoxy compound having at least 3 alkyleneoxy units, preferably from 3 to 100 alkyleneoxy units.

15. Method according to claim 14, wherein reacting the at least one alkoxy silane and the at least one second polyalkyleneoxy compound is performed in an organic solvent in the presence of an acid or a base.

16. Method according to any one of the claims 13 to 15, wherein the first polyalkyleneoxy compound has from 3 to 100 alkyleneoxy units.

17. Composition comprising a mixture of the modified colloidal silica particle according to the claims 1-9 and the at least one first polyalkyleneoxy compound having at least 3 alkyleneoxy units.

18. Aqueous dispersion comprising modified colloidal silica particles according to any one of the claims 1-9, or a composition according to claim 17.

19. Use of a modified colloidal silica particle covalently linked to at least one polyalkyleneoxy moiety having at least 3 alkyleneoxy units or an aqueous dispersion thereof as an emulsifier.

20. Use according to claim 19, wherein the modified silica particles or the aqueous dispersion is used as an emulsifier or dispersant for agriculturally active ingredient, asphalt, paper sizing agent or oil.

## Patentansprüche

1. Modifiziertes kolloidales Silica-Teilchen, das kovalent mit mindestens einem Polyalkylenoxy-Rest mit mindestens 3 Alkylenoxy-Einheiten verbunden ist, wobei der Polyalkylenoxy-Rest von einer Alkylgruppe begrenzt ist.

2. Modifiziertes Silica-Teilchen nach Anspruch 1, wobei das modifizierte kolloidale Silica-Teilchen kovalent durch ein Alkoxysilan mit dem mindestens einen Polyalkylenoxy-Rest verbunden ist.

3. Modifiziertes Silica-Teilchen nach Anspruch 1 oder 2, wobei das modifizierte kolloidale Silica-Teilchen kovalent durch eine Siloxan-Bindung verbunden ist, die durch Kondensation eines Silans mit dem mindestens einen Polyalkylenoxy-Rest gebildet ist.

4. Modifiziertes Silica-Teilchen nach einem der vorhergehenden Ansprüche, wobei das modifizierte kolloidale Silica-Teilchen kovalent durch eine Siloxan-Bindung verbunden ist, die durch Kondensation eines mindestens einen Polyalkylenoxy-Rest enthaltenden Silans gebildet ist.

5. Modifiziertes Silica-Teilchen nach einem der vorhergehenden Ansprüche, wobei das Teilchen nicht durch eine ethylenisch ungesättigte Gruppe modifiziert oder an einer lichtempfindlichen lithographischen Druckplatte anhaftet.

6. Modifiziertes Silica-Teilchen nach einem der vorhergehenden Ansprüche, wobei der Polyalkylenoxy-Rest aus Polypropylenglykol oder Polyethylenglykol oder deren Copolymeren besteht.

7. Modifiziertes Silica-Teilchen nach einem der vorhergehenden Ansprüche, wobei der Polyalkylenoxy-Rest von einer Methylgruppe begrenzt ist.

8. Modifiziertes Silica-Teilchen nach einem der vorhergehenden Ansprüche, wobei die Oberflächendichte von Polyalkylenoxy-Rest zu Silica-Teilchen von 0,1 bis 4 µMol/m² Silica-Oberfläche beträgt.

9. Modifiziertes Silica-Teilchen nach einem der vorhergehenden Ansprüche, wobei der Polyalkylenoxy-Rest von 3 bis 100 Alkylenoxy-Einheiten, vorzugsweise von 15 bis 60 Alkylenoxy-Einheiten, aufweist.

10. Modifiziertes Silica-Teilchen nach einem der vorhergehenden Ansprüche, wobei es ein Molverhältnis von Alkoxysilan zu Polyalkylenoxy-Rest von 0,5 bis 1,5 aufweist.

11. Modifiziertes Silica-Teilchen nach einem der vorhergehenden Ansprüche, weiterhin mindestens einem damit verbundenen hydrophoben Rest umfassend.

12. Modifiziertes Silica-Teilchen nach einem der vorhergehenden Ansprüche, wobei es ein Molverhältnis von hydrophobem Rest zu Polyalkylenoxy-Rest von 0,1 bis 10 aufweist.

13. Verfahren zur Herstellung eines modifizierten Silica-Teilchens nach Anspruch 1, das eine Reaktion von mindestens einer ersten Polyalkylenoxy-Verbindung mit mindestens 3 Alkylenoxy-Einheiten mit einem kolloidalen Silica-Teilchen zur Bildung einer kovalenten Bindung zwischen der mindestens ersten Polyalkylenoxy-Verbindung und dem Silica-Teilchen umfasst, wobei die Polyalkylenoxy-Verbindung von einer Alkylgruppe begrenzt ist.

14. Verfahren nach Anspruch 13, wobei dieses weiterhin das Herstellen der ersten Polyalkylenoxy-Verbindung durch die Reaktion von mindestens einem Alkoxysilan mit mindestens einer zweiten Polyalkylenoxy-Verbindung mit mindestens 3 Alkylenoxy-Einheiten, vorzugsweise von 3 bis 100 Alkylenoxy-Einheiten, umfasst.

15. Verfahren nach Anspruch 14, wobei die Reaktion des mindestens einen Alkoxysilans und der mindestens einen zweiten Polyalkylenoxy-Verbindung in einem organischen Lösungsmittel in Gegenwart einer Säure oder einer Base stattfindet.

16. Verfahren nach einem der Ansprüche 13 bis 15, wobei die erste Polyalkylenoxy-Verbindung von 3 bis 100 Alkylenoxy-Einheiten aufweist.

17. Zusammensetzung, die eine Mischung des modifizierten kolloidalen Silica-Teilchens nach den Ansprüchen 1 bis 9 und der mindestens einen ersten Polyalkylenoxy-Verbindung mit mindestens 3 Alkylenoxy-Einheiten umfasst.

18. Wässrige Dispersion umfassend modifizierten kolloidalen Silica-Teilchen nach einem der Ansprüche 1 bis 9 oder einer Zusammensetzung nach Anspruch 17.

19. Verwendung eines modifizierten kolloidalen Silica-Teilchens, das kovalent mit mindestens einem Polyalkylenoxy-Rest mit mindestens 3 Alkylenoxy-Einheiten verbunden ist, oder einer wässrigen Dispersion daraus als Emulgator.

20. Verwendung nach Anspruch 19, wobei die modifizierten Silica-Teilchen oder die wässrige Dispersion als Emulgator oder Dispersionsmittel für einen landwirtschaftlich wirksamen Bestandteil, Asphalt, Papierleim oder Öl eingesetzt werden.

## Revendications

1. Particule de silice colloïdale modifiée liée de manière covalente à au moins un fragment polyalkylèneoxy ayant au moins 3 motifs alkylèneoxy, dans laquelle ledit fragment polyalkylèneoxy se termine par un groupe alkyle.

2. Particule de silice modifiée selon la revendication 1, dans laquelle ladite particule de silice colloïdale modifiée est liée de manière covalente par un alcoxysilane audit au moins un fragment polyalkylèneoxy.

3. Particule de silice modifiée selon la revendication 1 ou 2, dans laquelle ladite particule de silice colloïdale modifiée est liée de manière covalente par une liaison siloxane formée par condensation d'un silane audit au moins un fragment polyalkylèneoxy.

4. Particule de silice modifiée selon l'une quelconque des revendications précédentes, dans laquelle ladite particule de silice colloïdale modifiée est liée de manière covalente par une liaison siloxane formée par condensation d'un silane contenant au moins un fragment polyalkylèneoxy.

5. Particule de silice modifiée selon l'une quelconque des revendications précédentes, dans laquelle ladite particule n'est pas modifiée par un groupe éthyléniquement insaturé ou fixée à une plaque d'impression lithographique photosensible.

6. Particule de silice modifiée selon l'une quelconque des revendications précédentes, dans laquelle ledit fragment polyalkylèneoxy est le polypropylène glycol ou le polyéthylène glycol ou leurs copolymères.

7. Particule de silice modifiée selon l'une quelconque des revendications précédentes, dans laquelle ledit fragment polyalkylèneoxy se termine par un groupe méthyle.

8. Particule de silice modifiée selon l'une quelconque des revendications précédentes, dans laquelle la densité surfacique du fragment polyalkylèneoxy par rapport aux particules de silice est comprise entre 0,1 et 4 µmoles/m² de surface de silice.

9. Particule de silice modifiée selon l'une quelconque des revendications précédentes, dans laquelle ledit fragment polyalkylèneoxy a entre 3 et 100 motifs alkylèneoxy, de préférence entre 15 et 60 motifs alkylèneoxy.

10. Particule de silice modifiée selon l'une quelconque des revendications précédentes, dans laquelle elle a un rapport molaire d'un alcoxysilane sur un fragment polyalkylèneoxy compris entre 0,5 et 1,5.

11. Particule de silice modifiée selon l'une quelconque des revendications précédentes, comprenant en outre au moins un fragment hydrophobe lié à celle-ci.

12. Particule de silice modifiée selon l'une quelconque des revendications précédentes, dans laquelle elle a un rapport molaire du fragment hydrophobe sur un fragment polyalkylèneoxy compris entre 0,1 à 10.

13. Procédé de production d'une particule de silice colloïdale modifiée selon la revendication 1, comprenant le fait de faire réagir au moins un premier composé polyalkylèneoxy ayant au moins 3 motifs alkylèneoxy avec une particule de silice colloïdale pour former une liaison covalente entre ledit au moins un premier composé polyalkylèneoxy et ladite particule de silice, dans lequel ledit composé polyalkylèneoxy se termine par un groupe alkyle.

14. Procédé selon la revendication 13, dans lequel il comprend en outre le fait de préparer ledit premier composé polyalkylèneoxy en faisant réagir au moins un alcoxysilane avec au moins un deuxième composé polyalkylèneoxy ayant au moins 3 motifs alkylèneoxy, de préférence de 3 à 100 motifs alkylèneoxy.

15. Procédé selon la revendication 14, dans lequel la réaction de l'au moins un alcoxysilane et de l'au moins un deuxième composé polyalkylèneoxy est réalisée dans un solvant organique en présence d'un acide ou d'une base.

16. Procédé selon l'une quelconque des revendications 13 à 15, dans lequel le premier composé polyalkylèneoxy a entre 3 et 100 motifs alkylèneoxy.

17. Composition comprenant un mélange de la particule de silice colloïdale modifiée selon les revendications 1 à 9 et l'au moins un premier composé polyalkylèneoxy ayant au moins 3 motifs alkylèneoxy.

18. Dispersion aqueuse comprenant des particules de silice colloïdale modifiée selon l'une quelconque des revendications 1 à 9, ou une composition selon la revendication 17.

19. Utilisation d'une particule de silice colloïdale modifiée liée de manière covalente à au moins un fragment polyalkylèneoxy ayant au moins 3 motifs alkylèneoxy ou d'une dispersion aqueuse de celle-ci en tant qu'émulsifiant.

20. Utilisation selon la revendication 19, dans laquelle les particules de silice modifiée ou la dispersion aqueuse est/sont utilisée(s) en tant qu'émulsifiant ou dispersant pour un ingrédient actif pour l'agriculture, un asphalte, un agent d'encollage du papier ou une huile.
